# FASCICULE DE BREVET EUROPEEN

(11) **EP 3 102 078 B1**
(45) Date de publication et mention de la délivrance du brevet: **18.04.2018**
(21) Numéro de dépôt: 15705676.3
(22) Date de dépôt: 02.02.2015
(51) Int. Cl.: A47J 45/10, A47J 45/07

(54) **DISPOSITIF DE PREHENSION AMOVIBLE D'UN RECIPIENT CULINAIRE A PINCE DE SERRAGE**
ABNEHMBARE GREIFVORRICHTUNG FÜR EINE KOCHVORRICHTUNG MIT EINER KLAMMER
REMOVABLE GRIPPING DEVICE FOR A COOKING VESSEL HAVING A CLAMP

(30) Priorité: 06.02.2014 FR 1450927
(43) Date de publication de la demande: 14.12.2016
(73) Titulaire: SEB S.A., 69130 Ecully (FR)
(72) Inventeur: CUILLERY, Pascal, F-74210 Faverges (FR)
(74) Mandataire: Bourrières, Patrice
(86) Numéro de dépôt international: PCT/FR2015/050230
(87) Numéro de publication internationale: WO 2015/118250

(56) Documents cités:
- EP-A1- 0 769 263
- FR-A1- 2 898 031

## Description

L'invention concerne un dispositif de préhension amovible d'une paroi latérale de récipient culinaire.

Le document FR2898031 décrit un tel dispositif comportant un corps de préhension s'étendant selon une direction longitudinale, deux organes de pince, l'un mobile en translation longitudinale et l'autre fixe, et un mécanisme de déplacement comportant un levier de commande et un organe de transmission destiné à transmettre le déplacement du levier à l'organe de pince mobile. Pour fixer le dispositif de préhension sur un récipient culinaire, un utilisateur actionne manuellement le levier de commande pour le faire pivoter d'une position déployée à une position escamotée, contre l'action de rappel d'un ressort d'ouverture. Le déplacement du levier est transmis à l'organe de pince mobile qui est entraîné en translation selon une direction longitudinale horizontale, ou proche de l'horizontale, d'une position ouverte à une position fermée de serrage, dans laquelle les deux organes de pince serrent la paroi latérale du récipient. Un ressort de compensation permet un ajustement de la distance entre les deux organes de pince en position de serrage à l'épaisseur de la paroi pincée. En outre, afin de limiter le risque d'écartement de l'organe de pince mobile lorsque celui-ci est en position de serrage, du fait par exemple d'une charge importante contenue dans le récipient culinaire, le dispositif de préhension comprend un organe de blocage, adapté pour bloquer l'organe de pince en position fermée ajustée à l'épaisseur de la paroi latérale pincée. Cet organe de blocage est monté mobile entre une position de libération et une position de blocage dans laquelle il immobilise l'organe de pince mobile par frottement. L'organe de blocage comporte par exemple deux rouleaux de pincement, montés libres en rotation dans une cage, et destinés à coopérer avec deux rampes respectives pour pincer transversalement l'organe de pince mobile. L'ajout de l'organe de blocage augmente le coût de fabrication du dispositif de préhension.

La présente invention propose une solution alternative, moins coûteuse, pour améliorer le blocage du dispositif de préhension amovible lorsque celui-ci est monté sur la paroi latérale d'un récipient culinaire.

A cet effet, l'invention concerne un dispositif de préhension amovible d'un récipient culinaire, comportant deux organes formant une pince de serrage d'une paroi du récipient culinaire, l'un des organes étant fixe et portant une surface d'appui et l'autre organe étant mobile en translation entre une position ouverte et une position fermée, ledit organe mobile comportant une extrémité coudée vers le bas qui forme un mors de la pince de serrage, caractérisé en ce que l'organe mobile est agencé pour, lors du serrage de la pince, se déplacer selon une direction de translation vers le bas formant avec la normale à la surface d'appui, dans un plan médian à la surface d'appui et contenant ladite direction de translation, un angle d'inclinaison compris entre 0 et 90°. En d'autres termes, l'angle d'inclinaison est contenu dans un quadrant inférieur délimité, dans le plan médian à la surface d'appui, par la normale à la surface d'appui et par une tangente à la surface d'appui, et situé à l'arrière de la surface d'appui.

Par un angle d'inclinaison compris entre 0 et 90°, on comprend que les bornes 0 et 90° ne sont pas comprises.

L'inclinaison de la direction de translation de l'organe de pince mobile a pour effet d'améliorer de façon significative le serrage. Lorsque le récipient culinaire contenant une charge est soulevé verticalement par un utilisateur, le dispositif de préhension est sollicité selon une direction globalement verticale. Grâce à l'invention, lorsque le dispositif de préhension est monté sur un récipient culinaire et serre la paroi latérale de celui-ci, chaque organe de pince exerce sur la paroi latérale une force de serrage ayant une composante horizontale et une composante verticale. L'effort de serrage est ainsi adapté pour assurer un serrage performant de la paroi, notamment en cas de sollicitation verticale du récipient culinaire à l'aide du dispositif de préhension. Cet effort de serrage est même renforcé par réaction de l'organe de pince mobile en cas de sollicitation verticale. En outre, l'inclinaison de l'effort de serrage permet de serrer efficacement non seulement la paroi latérale mais également le bord verseur du récipient culinaire, quelle que soit l'épaisseur de celui-ci. Cela permet d'augmenter la surface de serrage et d'appliquer un effort de serrage sur une portion de surface, au niveau du bord verseur, orientée selon une direction horizontale ou proche de l'horizontale. L'effort de serrage est ainsi mieux réparti spatialement. En cas de sollicitation verticale, c'est directement l'effort de serrage, et non un effort de frottement connexe, qui agit pour maintenir le récipient culinaire solidaire du dispositif de préhension. Grâce à cela, l'effort de serrage peut être réduit, sans réduction d'efficacité, ce qui permet de limiter la détérioration du revêtement du récipient culinaire sous l'effet du serrage, induite par les serrages répétés.

En définitive, le dispositif de préhension selon l'invention peut être dépourvu d'organe de blocage tout en offrant un serrage performant, limitant le risque d'écartement de l'organe de pince mobile en position de serrage. Les coûts de fabrication du dispositif de préhension peuvent ainsi être réduits.

Avantageusement, ledit angle d'inclinaison est supérieur ou égal à 5°. Avantageusement encore, ledit angle d'inclinaison est supérieur ou égal à 10°, notamment compris entre 25° et 35°.

Dans une forme de réalisation particulière, il comprend un organe de blocage mobile entre une position de libération et une position de blocage dans laquelle il est agencé pour immobiliser par frottement l'organe de pince mobile en position fermée.

Le dispositif de préhension peut intégrer un organe de blocage pour contribuer, de façon complémentaire, à immobiliser l'organe de pince mobile en position de serrage. L'organe de blocage peut notamment être associé à une direction inclinée de translation de l'organe de pince mobile, dans le cas d'un angle d'inclinaison limité, par exemple compris entre 5° et 15°.

Avantageusement, le dispositif de préhension comprend un mécanisme de déplacement adapté pour être commandé manuellement entre une position d'ouverture et une position de fermeture et pour entraîner en translation l'organe de pince mobile d'une position ouverte à une position fermée de serrage, lors du passage de la position d'ouverture à la position de fermeture du mécanisme de déplacement. Dans une forme de réalisation particulière, l'organe de blocage et le mécanisme de déplacement sont agencés pour coopérer de manière à faire passer l'organe de blocage de sa position de libération à sa position de blocage par entraînement du mécanisme de déplacement et sous l'action de rappel d'un élément ressort.

Dans ce cas, et avantageusement, l'organe de blocage et le mécanisme de déplacement sont agencés pour coopérer de manière à faire passer l'organe de blocage de sa position de libération à sa position de blocage en fin de course du mécanisme de déplacement de sa position d'ouverture à sa position de fermeture. Dans une forme de réalisation particulière, l'organe de blocage comporte deux éléments de pincement de l'organe de pince mobile, mobiles en translation selon une direction orthogonale à la direction de translation de l'organe de pince mobile. Avantageusement, le mécanisme de déplacement comprend un levier de commande adapté pour pivoter entre une position déployée et une position escamotée et un organe de transmission agencé pour transformer le pivotement du levier en un mouvement de translation de l'organe de pince mobile.

L'invention sera mieux comprise à l'aide de la description suivante de plusieurs formes de réalisation du dispositif de préhension amovible d'un récipient culinaire selon l'invention, en référence aux dessins annexés sur lesquels :
- Les figures 1A à 1C représentent le dispositif de préhension en position ouverte, respectivement en vue de côté, en vue de coupe A-A et en vue de dessus, selon une première forme de réalisation de l'invention ;

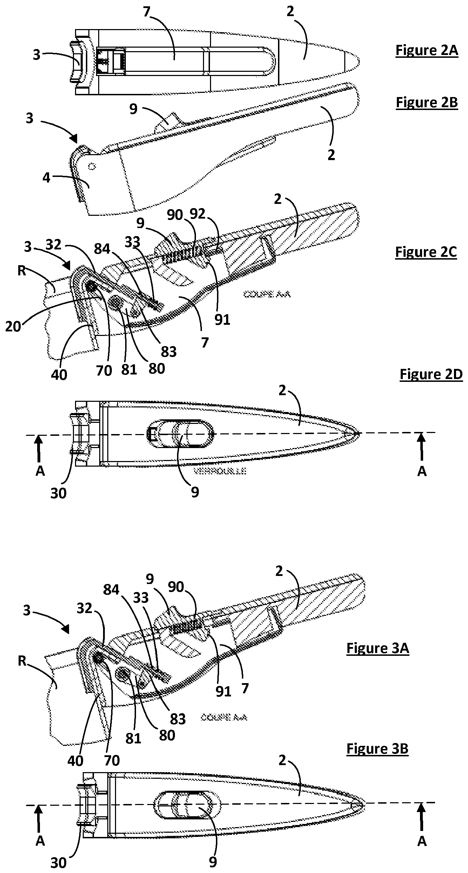

- Les figures 2A à 2D représentent le dispositif de préhension en position fermée et verrouillée, respectivement en vue de dessous, en vue de côté, en vue de coupe A-A, et en vue de dessus, selon la première forme de réalisation de l'invention ;
- Les figures 3A et 3B représentent le dispositif de préhension en position fermée et déverrouillée, respectivement en vue de coupe A-A et en vue de dessus, selon la première forme de réalisation de l'invention ;

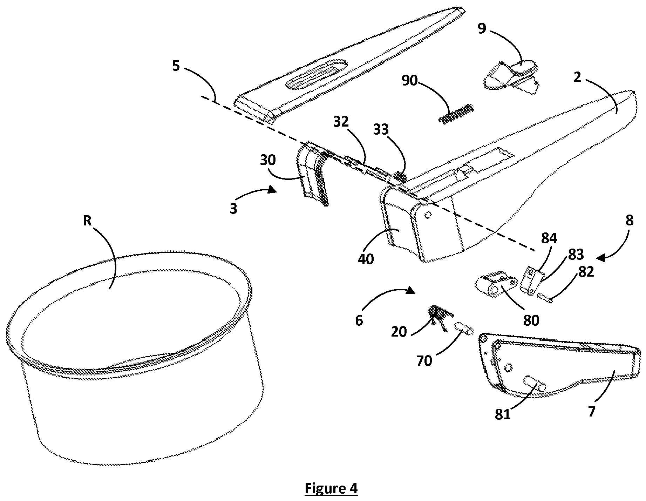

- La figure 4 représente une vue éclatée du dispositif de préhension, selon la première forme de réalisation de l'invention ;
- La figure 5 représente le dispositif de préhension selon une deuxième forme de réalisation de l'invention, en vue de coupe AA, en position ouverte ;
- La figure 6 représente le dispositif de préhension selon la deuxième forme de réalisation de l'invention, en vue de coupe AA, en position fermée ;
- La figure 7 représente le dispositif de préhension selon la deuxième forme de réalisation, en vue éclatée ;
- La figure 8 représente un schéma simplifié d'un récipient culinaire et d'un angle de serrage du dispositif de préhension selon la première forme de réalisation.

Le dispositif de préhension amovible 1, destiné à être monté sur un récipient ou ustensile culinaire, comprend un corps de préhension 2 s'étendant longitudinalement et, à une extrémité avant, deux organes 3, 4 formant pince de serrage.

D'emblée, on notera que les termes « avant » et « arrière » qui caractérisent certains éléments du dispositif de préhension amovible 1 font référence, respectivement, à l'extrémité dite « avant » du dispositif de préhension amovible 1 destinée à être montée sur la paroi latérale d'un récipient ou ustensile culinaire et à l'extrémité opposée du dispositif de préhension amovible 1, dite « arrière », destinée à être saisie manuellement par un utilisateur pour manipuler le récipient ou l'ustensile culinaire. Une surface est dite « avant » lorsqu'elle est orientée vers l'avant, c'est-à-dire vers l'extrémité avant du dispositif de préhension amovible 1. A l'inverse, une surface est dite « arrière » lorsqu'elle est orientée vers l'arrière, c'est-à-dire vers l'extrémité arrière du dispositif de préhension amovible 1 destinée à être saisie manuellement par un utilisateur et opposée à celle destinée à être montée sur un récipient ou ustensile culinaire. En outre, un premier élément est situé en « avant » d'un deuxième élément lorsqu'il est situé, par rapport à ce deuxième élément et selon la direction longitudinale du dispositif de préhension amovible 1, du côté contenant l'extrémité avant du dispositif de préhension amovible 1. De même, un premier élément est situé en « arrière » d'un deuxième élément lorsqu'il est situé, par rapport à ce deuxième élément et selon la direction longitudinale du dispositif de préhension amovible 1, du côté contenant l'extrémité arrière du dispositif de préhension amovible 1.

Les termes « supérieur » (ou « au-dessus ») et « inférieur » (ou « au-dessous ») caractérisent les éléments du dispositif de préhension 1 destinés, respectivement, à être dirigés vers le haut et vers le bas, ou situés en haut (ou plus haut) et en bas (ou plus bas), lorsque le dispositif de préhension amovible 1 est monté sur un récipient culinaire lui-même posé sur un plan horizontal et s'étend selon une direction horizontale ou proche de l'horizontale.

On notera également que les éléments identiques ou correspondants représentés sur les différentes figures portent les mêmes références.

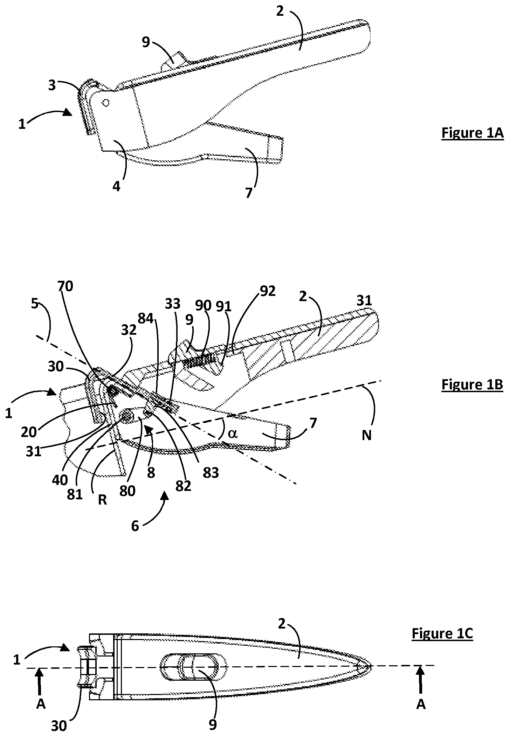

Les organes 3, 4 forment ainsi une pince adaptée pour pincer, ou serrer, la paroi latérale d'un récipient culinaire R (représenté par exemple sur la figure 1B).

L'organe 4 de pince est fixe et solidaire du corps de préhension 2. Il comprend une surface avant d'appui, ou de contact, 40, dirigée vers l'avant du dispositif de préhension amovible 1 et destinée à venir en appui contre la face externe d'une paroi latérale d'un récipient culinaire R sur lequel le dispositif de préhension amovible 1 est monté. Cette surface d'appui 40 est conformée pour épouser la forme de la paroi latérale du récipient culinaire. Elle peut, par exemple, avoir une forme de portion de cylindre ou de portion de cône.

L'organe 3 de pince est monté mobile en translation, selon une direction de translation 5, par rapport à l'organe 4 fixe, entre une position ouverte, dans laquelle l'organe 3 de pince et l'organe 4 fixe sont écartés l'un de l'autre de manière à libérer la paroi latérale du récipient culinaire R, et une position fermée de serrage, dans laquelle les deux organes 3, 4 sont rapprochés l'un de l'autre et séparés par une distance correspondant à l'épaisseur de la paroi latérale d'un récipient culinaire R à serrer. L'organe mobile 3 comprend une extrémité coudée vers le bas qui forme une patte avant d'appui 30 portant une surface arrière d'appui 31 adaptée pour coopérer avec la surface avant d'appui 40 de l'organe 4 fixe de manière à pincer la paroi latérale de récipient culinaire R. La patte 30 est prolongée à l'arrière par un bras 32 d'entraînement, par lequel la patte 30 est destinée à être entraînée en translation. La patte 30 présente une portion de liaison arrondie à proximité de la liaison avec le bras 32.

Sur la figure 1C, on a représenté un plan de coupe AA constituant un plan médian du dispositif de préhension 1, coupant celui-ci au milieu dans un sens longitudinal. Les deux parties du dispositif de préhension amovible 1 situées de part et d'autre du plan médian AA sont au moins partiellement (c'est-à-dire globalement) symétriques l'une de l'autre mais peuvent comprendre des éléments ou formes non symétriques. Notons que le plan AA constitue également un plan médian de la surface avant d'appui 40 ainsi que de la surface arrière d'appui 31.

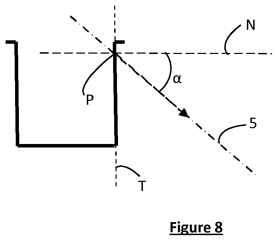

La direction de translation 5 de l'organe 3 de pince mobile est contenue dans ce plan médian AA et forme avec la direction N normale à la surface d'appui 40, dans le plan médian AA, un angle d'inclinaison α, également appelé angle de serrage. En référence au schéma simplifié de la figure 8, considérons quatre quadrants (c'est-à-dire quatre secteurs angulaires de 90°) dans le plan médian AA, formés à partir d'un point P de la surface d'appui 40 et délimités par la direction normale N à la surface d'appui 40 et la direction tangente T à la surface d'appui 40. L'angle de serrage α est contenu dans le quadrant inférieur, c'est-à-dire le quadrant délimité, dans le plan AA médian à la surface d'appui 40, par la normale N à la surface d'appui et par une tangente T à la surface d'appui et situé au-dessous de la direction normale N et à l'arrière de la surface d'appui 40. Dans l'exemple de réalisation représenté sur les figures 1A à 1C, l'angle de serrage α est de l'ordre de 45°. D'une manière plus générale, cet angle de serrage α peut être supérieur ou égal à 5°, par exemple compris entre 10° et 35°. Ainsi, l'organe 3 de pince mobile est agencé de sorte que, lors du serrage de la pince, il se déplace selon la direction de translation 5 formant avec la normale N à la surface d'appui 40, dans un plan AA médian à la surface d'appui 40 et contenant ladite direction de translation 5, un angle d'inclinaison α contenu dans un quadrant inférieur délimité, dans le plan AA médian à la surface d'appui 40, par la normale N à la surface d'appui 40 et par une tangente T à la surface d'appui 40 et situé à l'arrière de la surface d'appui 40.

Pour commander manuellement le déplacement de l'organe 3 de pince mobile, le dispositif de préhension 1 comprend un mécanisme de déplacement 6 comportant un organe de commande 7 et un organe de transmission 8. Le mécanisme de déplacement 6 est agencé pour être commandé manuellement de manière à passer d'une position d'ouverture à une position de fermeture et, lors du passage de la position d'ouverture à la position de fermeture, à entraîner en déplacement l'organe 3 de pince mobile entre sa position ouverte et sa position fermée de serrage, dans laquelle les deux organes 3, 4 de pince sont adaptés pour pincer la paroi latérale d'un récipient culinaire R.

Dans l'exemple particulier de réalisation décrit ici, l'organe de commande 7 comprend un levier monté mobile, ici pivotant autour d'un axe 70 monté sur le corps de préhension 2, entre une position déployée et une position escamotée, et destiné à être actionné manuellement par un utilisateur. En variante, l'organe de commande 7 pourrait être mobile en translation. Un ressort d'ouverture 20 est prévu pour solliciter (ou rappeler) le levier 7 dans sa position déployée, le passage de la position déployée à la position escamotée s'effectuant contre l'action de rappel du ressort 20. Dans l'exemple particulier décrit ici, le ressort 20 comprend deux ressorts de torsion juxtaposés, entourant l'axe 70, et comportant chacun deux extrémités libres en appui respectivement contre le corps de préhension 2 et contre le levier 7.

L'organe de transmission 8 est adapté pour transmettre le déplacement du levier 7 à l'organe de pince 3 mobile. Il comprend ici
- une première bielle 80 montée, à une première extrémité, de façon pivotante autour d'un arbre 81 sur le levier 7 et reliée, à une deuxième extrémité, de façon pivotante autour d'un arbre 82 à une deuxième bielle 83 ;
- la deuxième bielle 83 comportant une première extrémité reliée de façon pivotante autour de l'arbre 82 à la première bielle 83 et une deuxième extrémité formant un coulisseau 84 qui est monté de façon coulissante dans une rainure de réception (non représentée) ménagée le long du bras 32 de l'organe 3 de pince mobile.

La bielle 80 comporte deux bras en U. Le fond du U est traversé par une ouverture de réception de l'arbre 81. Les deux bras du U ménagent, à leurs extrémités, deux ouvertures en regard l'une de l'autre de réception de l'arbre 82. L'espace entre les extrémités libres des deux bras en U est adapté pour loger la première extrémité de liaison de la bielle 83.

L'organe de transmission 8 est adapté pour transformer le déplacement du levier 7 (en pivotement dans l'exemple particulier décrit ici) en une translation de l'organe 3 de pince. Il pourrait toutefois être conçu à l'aide d'un mécanisme de transformation cinématique différent de celui qui vient d'être décrit.

Dans l'exemple de réalisation particulier décrit ici, l'organe de transmission 8 comprend également un ressort de compensation 33 permettant une adaptation du dispositif de préhension 1 à différentes épaisseurs de paroi latérale de récipient culinaire à pincer. Le ressort de compensation 33 prend appui à une première extrémité (avant) contre le coulisseau 84, et à une deuxième extrémité (arrière) contre le fond (arrière) de la rainure de réception du coulisseau 84 ménagée dans l'organe 3 de pince. Il permet un ajustement du serrage des organes 3, 4 formant pince à l'épaisseur de la paroi à pincer. Lorsque l'organe 3 de pince est en position ouverte, l'extrémité du coulisseau 84 est maintenue en appui contre l'avant de la rainure de réception sous l'action de poussée du ressort de compensation 33.

Les deux bielles 80 et 83 sont agencées pour coopérer de manière à entraîner en translation l'organe 3 de pince, par le biais du coulisseau 84, lorsque le levier 7 est pivoté.

Lorsque le levier 7 pivote dans un premier sens de sa position déployée à sa position escamotée, sous l'action d'une commande manuelle d'un utilisateur, l'organe de transmission 8 transforme le déplacement en pivotement du levier 7 en un déplacement en translation, selon la direction 5 inclinée de l'angle α par rapport à la normale à la surface d'appui 40, de l'organe 3 de pince qui passe de sa position ouverte à sa position fermée. Plus précisément, lorsque le levier 7 est pivoté autour de l'axe 70 de sa position déployée à sa position escamotée, l'arbre 81 est entraîné en déplacement selon une trajectoire en arc de cercle centré autour de l'axe 70. Cela a pour effet de faire pivoter la bielle 80 dans le sens contraire au sens de pivotement du levier 7 et d'entraîner le coulisseau 84 en déplacement longitudinal selon la direction 5 de translation dans le sens de serrage. Sous l'action d'entraînement du coulisseau 84, l'organe 3 de pince se déplace en translation selon la direction 5, dans le sens de serrage, de sa position ouverte à sa position fermée. Le ressort de compensation 33 permet d'ajuster l'amplitude de serrage à l'épaisseur de la paroi pincée.

Lorsque le levier 7 pivote dans un deuxième sens (opposé au premier sens) de sa position déployée à sa position escamotée, les mouvements décrits ci-dessus sont inversés.

Le dispositif de préhension amovible 1 comprend également un bouton de verrouillage 9, monté mobile ici en translation sur le corps de préhension 2, entre une position déverrouillée et une position verrouillée, et destiné à être commandé manuellement par un utilisateur. Le bouton de verrouillage 9 est rappelé en position de verrouillage par un ressort 90 de rappel. Il comprend une tête inférieure d'accrochage 91 destinée à coopérer avec une butée d'accrochage 92 solidaire du levier 7 de manière à verrouiller celui-ci en position escamotée. Pour déverrouiller le levier 7, un utilisateur doit déplacer manuellement le bouton de verrouillage 9 ici vers l'avant, de sa position verrouillée à sa position déverrouillée, contre l'action de rappel du ressort 90. Une fois libéré, le levier 7 est agencé pour pivoter de sa position escamotée à sa position déployée sous l'action de rappel du ressort d'ouverture 20.

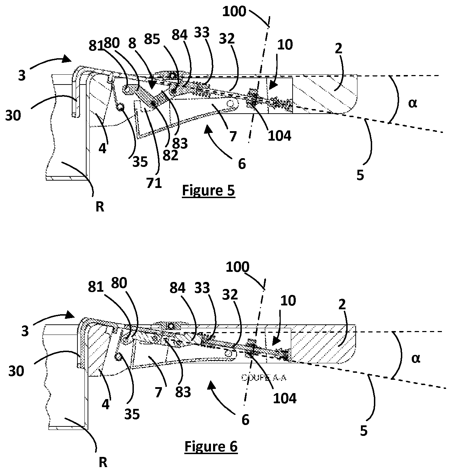

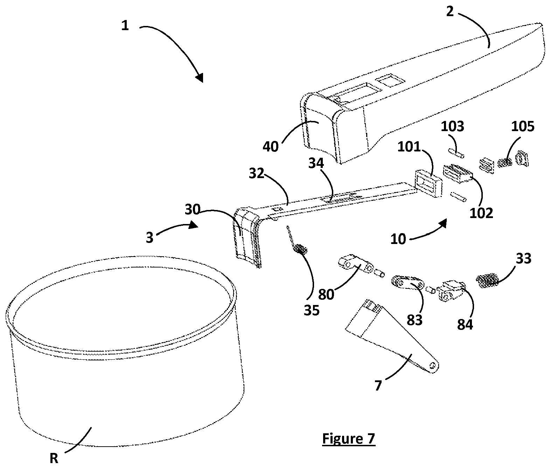

Sur les figures 5 à 7, on a représenté une deuxième forme de réalisation du dispositif de préhension 1. Celui-ci comprend, comme précédemment décrit, un corps de préhension 2, deux organes 3, 4 de pince, respectivement mobile et fixe, un mécanisme de déplacement 6 comportant un levier 7 de commande et un organe de transmission 8. Le dispositif représenté sur les figures 5 à 7 diffère de la première forme de réalisation précédemment décrite essentiellement par les éléments décrits ci-après.

L'organe 3 de pince mobile est monté mobile en translation selon une direction 5 dont l'angle d'inclinaison α (ou angle de serrage) est ici de l'ordre de 10°. Il comprend une patte avant d'appui 30 prolongée, à l'arrière, par l'intermédiaire d'une portion arrondie de liaison, par un bras 32 d'entraînement en forme de lame.

L'organe de transmission 8 comprend :
- un coulisseau 84 qui est monté sur l'organe 3 de pince mobile, de façon coulissante dans une rainure de réception 34 ménagée le long du bras 32 ;
- une première bielle 80 qui est montée de façon pivotante autour d'un arbre 81 au corps de préhension 2, par une première extrémité avant, et de façon coulissante dans une rainure 71 portée par le levier 7, par une deuxième extrémité arrière ;
- une deuxième bielle 83, qui est montée de façon pivotante autour d'un arbre 82 à la deuxième extrémité (arrière) de la première bielle 80 (et donc de façon coulissante dans la rainure 71), par une première extrémité avant, et autour d'un arbre 85 au coulisseau 84, par une deuxième extrémité arrière.

Un ressort de compensation 33, en appui à une première extrémité avant contre le coulisseau 84 et à une deuxième extrémité arrière contre l'organe 3 de pince mobile (ici contre le fond arrière de la rainure de réception 34), permet un ajustement de la pince formée par les organes 3, 4 à l'épaisseur de la paroi à pincer.

L'organe 3 de pince est rappelé en position ouverte par un ressort d'ouverture 35 (ici un ressort de torsion) qui est en appui sur le corps de préhension 2, à une extrémité, et sur l'organe 3 de pince mobile, à une autre extrémité.

Afin d'immobiliser de façon sûre l'organe 3 de pince mobile en position fermée (de serrage), ajustée à l'épaisseur de la paroi du récipient culinaire à pincer, et d'éviter tout écartement de la pince formée par les organes 3 et 4, le dispositif de préhension amovible 1 comprend en outre un organe de blocage 10. Celui-ci est monté mobile sur le corps de préhension 2 entre une position de libération et une position de blocage, dans laquelle il immobilise l'organe 3 de pince mobile en position fermée, ajustée à l'épaisseur de la paroi pincée. Dans l'exemple de réalisation particulier décrit ici, l'immobilisation est réalisée par serrage selon une direction de serrage 100 orthogonale à la direction de translation 5.

L'organe de blocage 10 est agencé pour passer de sa position de libération à sa position de blocage sous l'action du levier 7, en fin de course de pivotement de la position déployée à la position escamotée. Plus précisément, l'organe de blocage 10 passe de la position de libération à la position de blocage lorsque le mécanisme de déplacement 6 est entre une position d'équilibre instable, définie comme étant la position dans laquelle l'arbre 82 de liaison entre les deux bielles 80, 83 traverse la droite définie par l'arbre 81 de liaison entre la première bielle 80 et le corps de préhension 2 et l'arbre 85 de liaison entre la deuxième bielle 83 et le coulisseau 84, et sa position de fermeture. Le levier 7 et l'organe de blocage 10 portent respectivement un ergot de déplacement et une surface de réception (non représentés) adaptés pour coopérer de manière à commander le passage entre la position de libération et la position de blocage de l'organe de blocage 10 en fin de pivotement du levier 7, lors de la fermeture de celui-ci, et actionner ainsi l'organe de blocage 10. L'ergot de déplacement et la surface de déplacement peuvent être analogues à ceux décrits dans le document FR2898031 permettant le déplacement de moyens de blocage par des moyens de déplacement comportant un levier.

Dans l'exemple de réalisation particulier décrit ici, l'organe de blocage 10 comporte une bague extérieure 101, de forme rectangulaire, et une cage intérieure 102 de support d'éléments 103 roulants de pincement, logée à l'intérieur de la bague 101 et montée coulissante sur le bras 32 de l'organe 3 de pince. Les éléments 103 roulants, ici en forme de cylindres, sont montés libre en rotation dans la cage 102. Ils s'étendent transversalement à la direction de translation 5, de part et d'autre du bras 32, respectivement au-dessus et au-dessous de celui-ci, et sont montés mobiles en translation selon la direction de serrage 100 entre une position de libération, dans laquelle ils sont libres de tourner dans la cage 102, et une position de pincement, dans laquelle ils pincent le bras 32 de l'organe 3 de pince. La bague extérieure 101 est solidaire du corps de préhension 2. Elle porte deux rampes 104 internes, respectivement supérieure et inférieure, disposées de part et d'autre du bras 32, chaque rampe étant positionnée à proximité d'un élément 103 roulant de pincement correspondant. Ces rampes 104 sont agencées pour déplacer les éléments 103 roulants selon la direction de serrage 100, jusqu'à les bloquer en rotation et pincer le bras 32 selon la direction 100 de manière à bloquer en translation selon la direction 5 l'organe 3 de pince. En outre, l'organe de blocage 10 comprend un ressort de blocage 105 adapté pour solliciter la cage 102, c'est-à-dire exercer une action de rappel sur la cage 102, vers sa position de verrouillage.

Ainsi, lorsqu'un utilisateur actionne manuellement le levier 7 de commande en le faisant pivoter de sa position déployée à sa position escamotée, cela a pour effet d'entraîner l'organe 3 de pince en translation vers l'arrière, selon la direction 5 définie par l'angle de serrage α, jusqu'à une position de serrage ajustée à l'épaisseur de la paroi latérale pincée sous l'action du ressort de compensation 33. Initialement, c'est-à-dire lorsque le levier 7 est en position déployée (ou d'ouverture), l'organe de blocage 10 est en position de libération, les éléments 103 roulants tournant librement dans la cage 102. Il est maintenu dans cette position de libération jusqu'à ce que le levier 7 atteigne une position proche de la position escamotée, en fin de pivotement. Peu avant que le levier 7 atteigne sa position escamotée, entre la position d'équilibre instable et la position de fermeture du mécanisme de déplacement, sous l'action combinée du levier 7 par le biais de son ergot de déplacement et du ressort de blocage 105, la cage 102 est déplacée vers l'avant de la position de libération à une position de blocage. Le déplacement de la cage 102 relativement à la bague 101 entraîne les éléments 103 roulants selon la direction 100, l'un vers l'autre, par réaction contre les rampes 104, jusqu'à ce qu'ils se bloquent en rotation et pincent le bras 32 d'entraînement de l'organe 3 de pince, ce qui garantit une immobilisation de l'organe 3 de pince en position de serrage ajustée à l'épaisseur de la paroi latérale du récipient culinaire.

D'autres variantes de réalisation de l'organe de blocage 10 sont possibles, notamment celles décrites dans le brevet FR2898031. En toute hypothèse, l'organe de blocage 10 comporte un mécanisme de blocage monté mobile sur le corps de préhension 2 entre une position de libération et une position de blocage, dans laquelle il immobilise l'organe 3 de pince en position de serrage ajustée, par exemple par frottement. En outre, le mécanisme de blocage est agencé pour passer de sa position de libération à sa position de blocage, par entraînement du mécanisme de déplacement, en fin de course de fermeture de celui-ci, c'est-à-dire peu avant que le mécanisme de déplacement n'atteigne sa position de fermeture. Le passage de la position de blocage à la position de libération s'effectue de façon correspondante lors de l'ouverture du levier.

## Revendications

1. Dispositif de préhension amovible d'un récipient culinaire, comportant deux organes (3, 4) formant une pince de serrage d'une paroi du récipient culinaire (R), l'un des organes (4) étant fixe et portant une surface d'appui (40) et l'autre organe (3) étant mobile en translation entre une position ouverte et une position fermée, ledit organe mobile comportant une extrémité coudée vers le bas qui forme un mors de la pince de serrage **caractérisé en ce que** l'extrémité coudée vers le bas de l'organe mobile (3) qui forme un mors de la pince de serrage est agencé pour, lors du serrage de la pince, se déplacer selon une direction de translation (5) vers le bas formant avec la normale (N) à la surface d'appui (40), dans un plan médian à la surface d'appui (40) et contenant ladite direction de translation (5), un angle d'inclinaison (α) compris entre 5 et 90°.

2. Dispositif selon la revendication 1, **caractérisé en ce que** ledit angle d'inclinaison (α) est supérieur ou égal à 10°, notamment compris entre 25° et 35°.

3. Dispositif selon l'une des revendications précédentes, **caractérisé en ce qu'**il comprend un organe de blocage (10) mobile entre une position de libération et une position de blocage dans laquelle il est agencé pour immobiliser par frottement l'organe (3) de pince mobile en position fermée.

4. Dispositif selon l'une des revendications précédentes, **caractérisé en ce qu'**il comprend un mécanisme de déplacement (7, 8) adapté pour être commandé manuellement entre une position d'ouverture et une position de fermeture et pour entraîner en translation l'organe (3) de pince mobile d'une position ouverte à une position fermée de serrage, lors du passage de la position d'ouverture à la position de fermeture du mécanisme de déplacement.

5. Dispositif selon la revendication 4, **caractérisé en ce que** l'organe de blocage (10) et le mécanisme de déplacement (7, 8) sont agencés pour coopérer de manière à faire passer l'organe de blocage (10) de sa position de libération à sa position de blocage par entraînement du mécanisme de déplacement et sous l'action de rappel d'un élément ressort (105).

6. Dispositif selon la revendication 5, **caractérisé en ce que** l'organe de blocage (10) et le mécanisme de déplacement (7, 8) sont agencés pour coopérer de manière à faire passer l'organe de blocage (10) de sa position de libération à sa position de blocage en fin de course du mécanisme de déplacement de sa position d'ouverture à sa position de fermeture.

7. Dispositif selon l'une des revendications 3 à 6, **caractérisé en ce que** l'organe de blocage (10) comporte deux éléments (103) de pincement de l'organe (3) de pince mobile, mobiles en translation selon une direction orthogonale à la direction de translation (5) de l'organe (3) de pince mobile.

8. Dispositif selon la revendication précédente, **caractérisé en ce que** le mécanisme de déplacement comprend un levier (7) de commande adapté pour pivoter entre une position déployée et une position escamotée ; et un organe de transmission (8) agencé pour transformer le pivotement du levier (7) en un mouvement de translation de l'organe de pince (3) mobile.

## Patentansprüche

1. Abnehmbare Vorrichtung zum Greifen eines Kochgefäßes, umfassend zwei Einrichtungen (3, 4), die eine Klemme zum Festspannen einer Wand des Kochgefäßes (R) bilden, wobei eine der Einrichtungen (4) feststehend ist und eine Stützfläche (40) aufweist, und wobei die andere Einrichtung (3) zwischen einer offenen Position und einer geschlossenen Position in Translation beweglich ist, wobei die bewegliche Einrichtung (3) ein nach unten gebogenes Ende aufweist, das eine Klemmbacke zum Festspannen bildet, **dadurch gekennzeichnet, dass** das nach unten gebogene Ende der beweglichen Einrichtung (3), das eine Klemmbacke zum Festspannen bildet, eingerichtet ist, sich beim Festspannen der Klemme in einer Translationsrichtung (5) nach unten zu bewegen, die mit der Normalen (N) an die Stützfläche (40) in einer Mittelebene an die Stützfläche (40), wobei sie die Translationsrichtung (5) enthält, einen Neigungswinkel (α) bildet, der zwischen 5 und 90° liegt.

2. Vorrichtung nach Anspruch 1, **dadurch gekennzeichnet, dass** der Neigungswinkel (α) größer als oder gleich 10° ist, insbesondere zwischen 25° und 35° liegt.

3. Vorrichtung nach einem der vorstehenden Ansprüche, **dadurch gekennzeichnet, dass** sie eine Verriegelungseinrichtung (10) umfasst, die zwischen einer Freigabeposition und einer Verriegelungsposition beweglich ist, in der sie eingerichtet ist, durch Reibung die bewegliche Klemmeinrichtung (3) in der geschlossenen Position zu immobilisieren.

4. Vorrichtung nach einem der vorstehenden Ansprüche, **dadurch gekennzeichnet, dass** sie einen Verschiebungsmechanismus (7, 8) umfasst, der eingerichtet ist, manuell zwischen einer Öffnungsposition und einer Schließposition gesteuert zu werden und die bewegliche Klemmeinrichtung (3) von einer offenen Position zu einer geschlossenen Klemmposition während des Übergangs von der Öffnungsposition zu der Schließposition des Verschiebungsmechanismus anzutreiben.

5. Vorrichtung nach Anspruch 4, **dadurch gekennzeichnet, dass** die Verriegelungseinrichtung (10) und der Verschiebungsmechanismus (7, 8) eingerichtet sind, so zusammenzuwirken, dass die Verriegelungseinrichtung (10) von ihrer Freigabeposition zu ihrer Verriegelungsposition durch Antreiben des Verschiebungsmechanismus und unter der Rückstellwirkung einer Federeinrichtung (105) übergehen gelassen wird.

6. Vorrichtung nach Anspruch 5, **dadurch gekennzeichnet, dass** die Verriegelungseinrichtung (10) und der Verschiebungsmechanismus (7, 8) eingerichtet sind, so zusammenzuwirken, dass die Verriegelungseinrichtung (10) aus ihrer Freigabeposition zu ihrer Verriegelungsposition am Ende des Laufs des Verschiebungsmechanismus von seiner Öffnungsposition zu seiner Schließposition übergehen gelassen wird.

7. Vorrichtung nach einem der Ansprüche 3 bis 6, **dadurch gekennzeichnet, dass** die Verriegelungseinrichtung (10) zwei Klemmelemente (103) der beweglichen Klemmeinrichtung (3) aufweist, die in Translation in einer Richtung orthogonal zu der Translationsrichtung (5) der beweglichen Klemmeinrichtung (3) beweglich sind.

8. Vorrichtung nach dem vorstehenden Anspruch, **dadurch gekennzeichnet, dass** der Verschiebungsmechanismus einen Hebel (7) zur Steuerung umfasst, der eingerichtet ist, zwischen einer ausgefahrenen Position und einer zurückgefahrenen Position zu schwenken; und eine Übertragungseinrichtung (8), die eingerichtet ist, um das Schwenken des Hebels (7) in eine Translationsbewegung der beweglichen Klemmeinrichtung (3) zu transformieren.

## Claims

1. Removable gripping device of a cooking vessel, comprising two members (3, 4) forming a clamp of a wall of the cooking vessel (R), one of the members (4) being fixed on a support surface (40) and the other member (3) being movable in translation between an open position and a closed position, said movable member having an end bent downwards forming a jaw of the clamp **characterized in that** the bent-down end of the movable member (3) forming a jaw of the chuck is arranged so as to, upon tightening of the clamp, move in a translational direction (5) downwards forming with the normal (N) at the bearing surface (40) in a median plane to the bearing surface (40) and containing said translation direction (5), an angle of inclination (α) between 5 and 90°.

2. Device according to claim 1, **characterized in that** said angle of inclination (α) is greater or equal to 10°, in particular between 25° and 35°.

3. Device according to one of the preceding claims, **characterized in that** it comprises a locking member (10) movable between a release position and a locking position wherein it is arranged to lock by friction on the movable clamp member (3) in the closed position.

4. Device according to one of the preceding claims, **characterized in that** it comprises a displacement mechanism (7, 8) adapted to be controlled manually between an open position and a closed position and for driving the movable clamp member (3) in translation from an open position to a closed clamping position, in the transition from the open position to the closed position of the moving mechanism.

5. Device according to claim 4, **characterized in that** the blocking member (10) and the moving mechanism (7, 8) are arranged to engage so as to move the locking member (10) from the release position thereof to the locking position thereof by driving of the moving mechanism by action of a spring member (105).

6. Device according to claim 5, **characterized in that** the blocking member (10) and the moving mechanism (7, 8) are arranged to engage so as to move the locking member (10) from the release position thereof to the locking position thereof at the end of the path of the moving mechanism from the open position thereof to the closed position thereof.

7. Device according to one of Claims 3 to 6, **characterized in that** the blocking member (10) comprises two clamping elements (103) of the movable clamp member (3), movable in translation in a direction orthogonal to the displacement direction (5) of the movable clamp member (3).

8. Device according to the preceding claim, **characterized in that** the displacement mechanism comprises a control lever (7) adapted to pivot between an extended position and a retracted position; and a transmission member (8) arranged to transform the pivoting of the lever (7) into a translational movement of the movable clamp member (3).
